# EUROPEAN PATENT APPLICATION

(11) **EP 0 905 621 A1**
(43) Date of publication of application: **31.03.1999**
(21) Application number: 98307475.8
(22) Date of filing: 15.09.1998
(51) Int. Cl.: G06F 9/46

(54) **Internet performance network**

(30) Priority: 26.09.1997 US 938508
(71) Applicant: LUCENT TECHNOLOGIES INC., Murray Hill, New Jersey 07974-0636 (US)
(72) Inventor: Siegel, Steven A., Naperville, Illinois 60565 (US); Thornberry, Robert J., Jr., Wheaton, Illinois 60187 (US)
(74) Representative: Watts, Christopher Malcolm Kelway, Dr.

(57) **Abstract**

An Internet service provider can improve Internet-like services to its customers by providing closely-controlled server computers and intelligent proxy servers under the control of a central control computer. The performance network provides access to information such as web sites through data networks operated and controlled by the Internet service provider. As the work load of the server increases, or as it might be unable to respond to requests for information by subscribers, the central control computer can allocate computation resources of other, less burdened machines to act as servers to those customers. The network also collects and aggregates customer information that can be made available to the providers of the server content.

## Description

### Background Of The Invention

This invention relates to computer networks. More particularly, this invention relates to computer networks that are used with, and form part of the internet.

The Internet, sometimes referred to as the world wide web, is a loosely-coupled network of computers and computer networks electrically linked together through a plethora of electronic media. The computers and computer networks are loosely coupled in that constituent computers vary in size, manufacture, operating systems and are interconnected so that these computers and networks themselves operate independently of each other, but exchange information with each other.

Information originating from one computer node of the Internet destined for another computer might be routed through several computers that comprise the Internet. As the volume of message traffic on the Internet has increased, transferring data across the network requires increasingly more real time. Internet users must wait for increasing amounts of time to receive requested data.

The recent proliferation of computers used by consumers and the proliferation of web sites operated by businesses of all kinds has increased network traffic and thereby is increasingly taxing the capabilities of the Internet. This proliferation has itself spawned new businesses. Businesses have sprung up to create software needed to run a web site. Other new businesses are dedicated to providing Internet access to end users and are known as Internet service providers. Some businesses now sell other businesses' ads on their web sites as a service. Examples of these companies include search engines and newspaper sites.

Two of the services provided by Internet service providers (ISPs) are both hosting services, allowing customers to publish on the Internet, and access services, allowing customers to retrieve information from the Internet or communicate over the Internet. Internet service providers' customers fall into two categories: businesses that use the Internet or world wide web for commercial advantage; and consumers, who are targeted for advertising by businesses.

Many commercial customers pay Internet service providers to maintain the computer resources necessary to provide a web site, which is nothing more than data stored on a computer which when it is transferred to another computer can be used to create an image, sound, text, series of images, etc. on the recipient computer. These web sites are typically commercial advertisements of goods and service. More and more businesses advertise their goods and services on web sites, which are server computers preprogrammed to download (i.e., transmit) information through the Internet to client computers that request the information. Businesses of all kinds, as well as individuals, now own and maintain web sites.

The second type of ISP customer is the consumer who uses the web browser or client, and is typically an individual who perceives some value in accessing and viewing the web sites of commercial entities.

The two categories of Internet service provider customers have demanding needs. Commercial customers of Internet service providers, who want to advertise goods or services on the Internet, want to increase the number of consumers who access their web sites and they want their web site readily and easily accessible to all the web browsers who might have an interest in viewing the information carried thereon. They want the consumers to have a pleasant experience at their web sites so that they are likely to return. Consumers who are visiting the web sites of businesses to get information or to be entertained would like to have no network delays and to have information available immediately.

It is well known however that as the number of users of the Internet and the amount of data transferred has increased, the response time of the network has increased. It takes more and more time to get information from a computer offering a web site of interest because the computer networks that provide Internet services have finite resources, and have a limited capability of servicing a limited number of computers at a given time.

As the number of hits on a web site increases however, physical limitations of the network invariably increases the time it takes to download a web site to additional browsers.

In order to satisfy the two categories of Internet service provider customers, the Internet service provider needs to make the most effective use of its network resources. Commercial customers of Internet service providers, who advertise goods and services, want to maximize the number of customers who access their web sites and want delays to obtaining information to be low. Said another way, they want to be perceived to be nearby and readily accessible by their customers. Typically these customers would pay the ISP based on the bandwidth supported in and out of their web sites. This is directly proportional to the number of simultaneous customers that can be supported and the average amount of data transferred. A second component of the amount paid to the hosting ISP would be the total amount of storage space used. In order to better meet these needs, ISPs need a way to control the use of their network resources to guarantee levels of service while providing only those resources necessary in order to minimize cost.

A method and a device by which an Internet service provider could improve the utilization of its computer resources for both categories of customers would be an improvement that might benefit all parties concerned: the ISP, the commercial user, and the consumer. In the case of an Internet service provider, providing Internet access to large numbers of subscribers, a means by which it could enhance Internet service to its own subscribers and by which it could control operating costs would be of considerable value.

Accordingly, an object of the invention is to provide a method and apparatus for performance and resource utilization of Intemet Service Provider networks by dynamically monitoring and controlling network resources. With this invention, ISPs can provide guaranteed levels of service while providing only those resources necessary in order to minimize cost.

### Summary Of The Invention

There is provided herein a method and apparatus for providing improved computer services to customers of an Internet service provider using a unique control architecture.

Unlike the Internet, which is a virtually unregulated network of computers, a closely controlled computer network architecture, optimized to control utilization of computer resources, allows the network to be dynamically reconfigured in response to changing demands on the network resources. Closer control of available computer resources improves overall network performance.

Rather than store computer resources on a single machine or a few closely linked machines that are accessible by numerous computers in a computer network, computer resources that are to be provided to only the Internet service providers customers are distributed throughout a network of computers accessible only to the customers of the Internet service provider. In a large computer network of computers configured to distribute computer information sought by end-user consumers, and intended to be distributed by commercial users to consumers, the close control of the distribution of such information and close control of the computer resources that are available to accomplish the information distribution improves overall network response time and performance to the network's users. Internet-like services can be provided by a service provider that are superior to the services currently offered through the existing Internet architecture.

### Brief Description Of The Drawing

**Figures 1 and 1A** show a graphical representation of the computer network organization contemplated by the preferred embodiment herein.

**Figure 2** shows a graphical representation of an alternate embodiment of the

**Figure 3** shows a graphical representation of the computer network contemplated by the invention as it presently relates to the Internet.

### Description Of The Preferred Embodiment

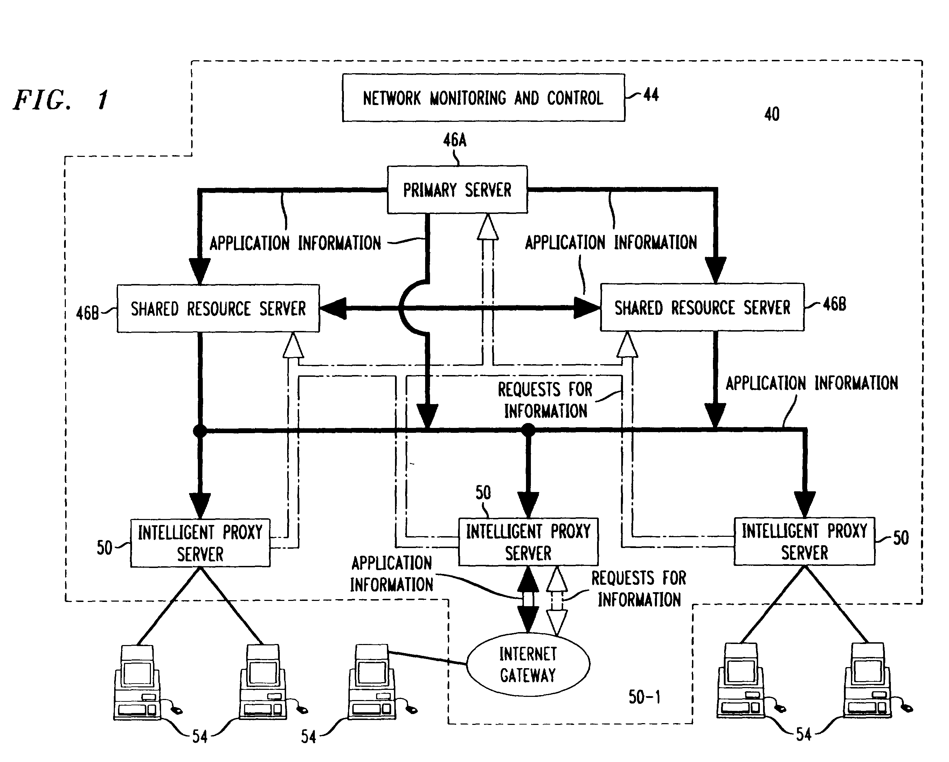

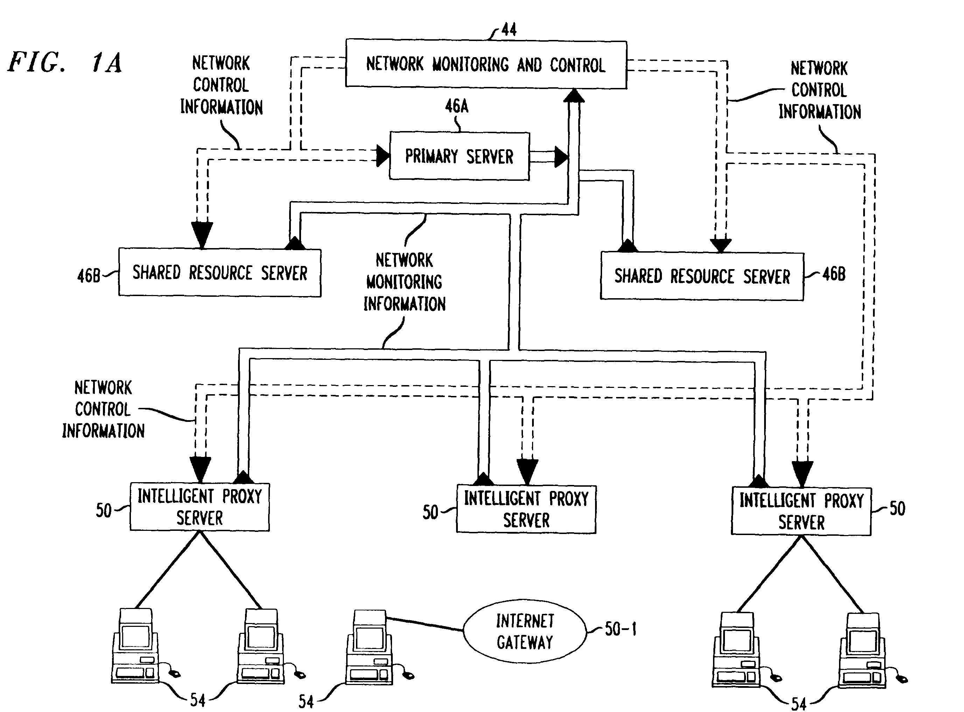

Figures 1 and 1A show a computer network (40) for improving service on the worldwide web and Internet. Figure 1 shows the flow of application information and the requests for application information between the computers of the network (40). Figure 1A shows the flow of monitoring and control information between the computers of the network (40).

Referring to Figures 1 and 1A, the network has three components: 1) a monitoring and controlling computer (44) that collects data on network performance and which can effect the movement of copies of computer data between server resources; 2) server resources, including both primary servers (46A) which are the source of data and shared resource servers (46B), host a variety of data as it is assigned by the controller computer (44); and 3) intelligent proxy computers (50) which can cache data, route requests to the appropriate server resources as assigned by the controller computer, and relay information from the server resources through its buffer to the browser or another network, thus accommodating faster network speeds than access speeds. The intelligent proxy computer can also collect detailed customer information, if desired, that can be aggregated at a later time to give to business customers, e.g., report on number of times customers look at a specific page of the web site.

Information stored within these computers is typically the data associated with a web site but might also include files for ftp transfer or data for other applications. The information storage media is typically random access memory but might also include data stored on magnetic tape, discs, CD-ROM or other media. The computers constituting the network would each have some electronic data storage means.

In a preferred embodiment, the monitoring and controller computer (44) is not involved in the actual transfer of data from the server resources (46A, 46B) to the requesting client (e.g., browser), rather, it monitors the performance of the network by collecting measurement data from the other nodes. For example, it would collect information on processor loads on the server resources and download times from requested data from each server resource. It can move copies of the data onto any of the shared server resources (46B) either based on network measurements or based on provisioning by operations personnel. It can provision the Intelligent Proxies (50) to go to a particular server resource (46A, 46B) to fulfill requests (e.g., http requests for web pages or ftp requests for files). It can also collect application-based usage measurements from the server resources (46A, 46B) and Intelligent Proxies (50) such as the number of requests for a given Web Page. Once the information is collected by the monitoring and controlling computer (44), shared resource servers can be reassigned without losing their application data. It can use the requesting intelligent proxy (50) as a means of collecting geographical-based application usage data. By assigning intelligent proxies (50) to geographical or marketing areas (e.g., states), information about the level of interest in each area can be determined based on which intelligent proxy made the request.

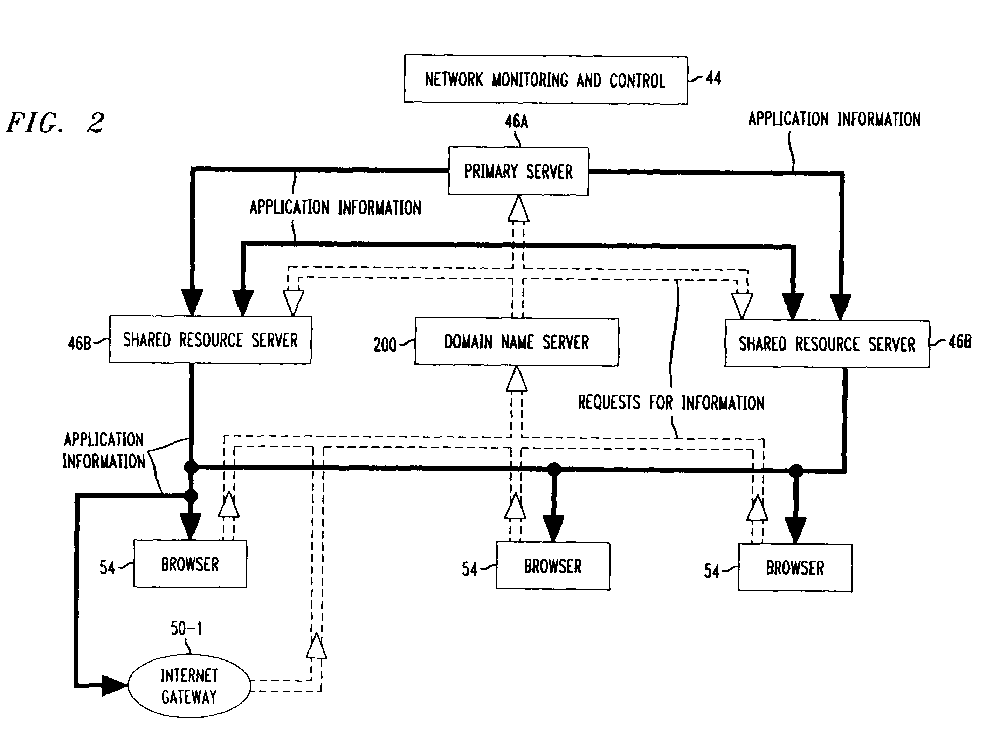

In an alternate embodiment shown in Figure 2, the routing to supported application information is provided by a Domain Name Server or DNS (200) instead of the Intelligent Proxy Servers (50). In this embodiment, no Intelligent Proxy Server (50) is required, rather routing to supported application is performed by a DNS (200) under the control of the Monitoring and Control Computer (44), i.e., the DNS (200) routing data for supported applications is dynamically controlled by the Monitoring and Control Computer (44).

As set forth above, the server resources (46A and 46B) are computers that contain and are the sources of data to be distributed throughout the network (40) and ultimately made available to the subscribers or client computers (54). The server resources (46A, 46B) are both logically and physically distributed throughout the network and linked to an Internet protocol data path. This distribution of server resources (46A and 46B) means that there are multiple routing paths to the supported application data and even a widespread natural disaster (e.g., fire, flood, earthquake) or equipment outage or failure will affect only a portion of the network (40) and its resources.

The primary servers (46A) are considered to be the permanent or long-term storage locations of information on any of the server resources (46A) and these computers typically will not be overwritten until an application or other information being distributed to subscribers (50) is to be changed. An example of when an application would be changed might be the introduction of new products or a new advertising campaign on a web page of an automobile manufacturer. This invention will not effect the methods of changing or updating the data.

The dynamic mirror servers, also known as the shared server resources (46B), are also computers that are preferably machines comparable to the primary servers (46A), however, copies of supported applications on primary servers (46A) are placed on the shared resource servers (46B) by the monitoring and controlling computer (44) when needed. For added flexibility, it is possible for the monitoring and controlling computer to designate which servers are primary and which are secondary. The data stored therein is replaced by other data or removed by the monitoring and controlling computer (44) when the shared resources (46B) are no longer needed by a supported application because of decreased demand or when for either business or performance reasons another supported application is assigned the shared resources the application had been using.

The Intelligent Proxy Servers (50) are separate computers that serve a defined community of users, either client browsers (54) or other networks (50-1). They receive requests for information (e.g., an http request for a web page or an ftp request for a file). If the information is not a supported application, i.e., the information is not already present within the particular machine (50), they forward a request for the information to the appropriate computer where the information is located as do current proxy cache servers. Unsupported applications, e.g., other web pages, may be hosted by another network, or they may be applications hosted by the Internet service provider that controls the network (40) shown in Figure 1 and 1A, but not included in the Internet Performance Network Architecture.

If information requests from a proxy server (50) is a supported application, the proxy servers (50) serve it to the requester, a browser (54) for example, from its cache if the information is in fact cached. Some supported data which is static (i.e., the data does not change based on whom requests it, time of request, or previous activity) can be cached at the intelligent proxy Server (50) making a request to the resource server (46) unnecessary. If it is not cached, the proxy servers (50) check where to get it from, based on a provisioned table maintained by the monitoring and controlling computer (44). The proxy servers (50) request the information, downloading it at a high data rate over the network and serving it to the requester from a buffer of the proxy server (50) at the rate supported by the connection to the browsers (54).

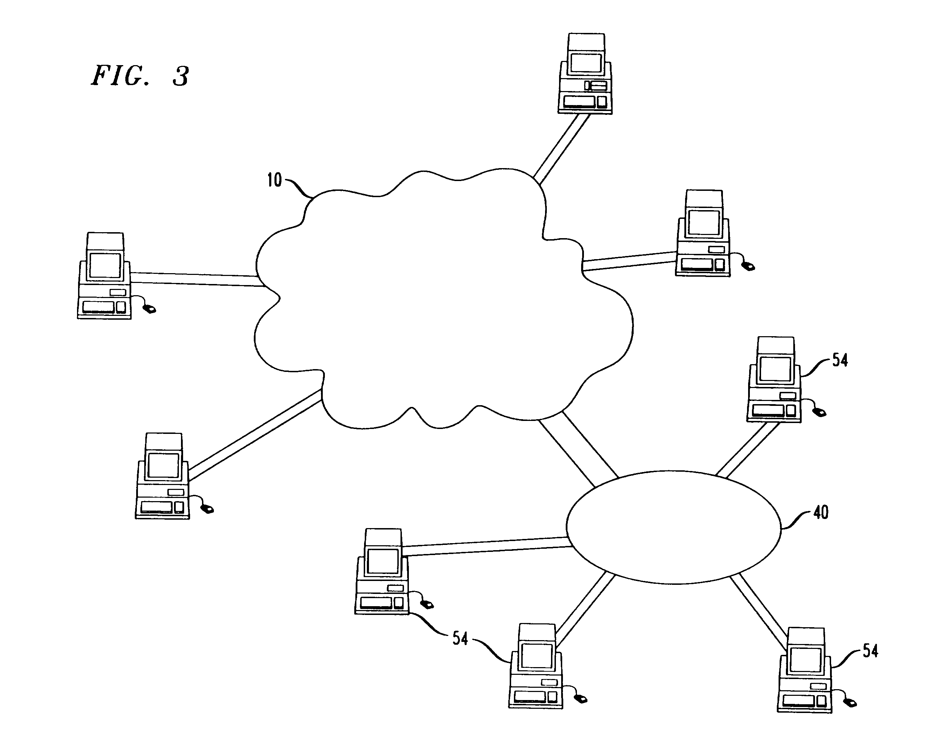

Figure 3 shows the relationship of the network shown in Figure 1 and 1A to the Internet (10) at large. In Figure 3, the computer network (40) shown in Figure 1 can be considered a separate network adjunct to the Internet (10). For the Internet service provider, the ability to control computer resources so as to control the performance of its services to all of its customers (54) and to optimize network resource utilization is an advantage over prior art.

In the embodiment shown in Figure 1 and 1A, computer network resources can be dynamically reallocated under the control of these main control computer (44) as the demand for information increases and decreases over time. In this way, resources can be allocated to control the access time that a consumer (54) experiences while simultaneously increasing the availability and the number of "hits" upon a web site whereat goods and services of the commercial customers are advertised. Unlike the current architecture of the Internet, which does not include any means by which information bottlenecks can be alleviated by a central controller, the invention disclosed herein permits intelligent, real-time control of computer network that can be continuously optimized according to the demands being placed upon the network.

To customers of an ISP using the invention describe herein, the Internet Performance Network Architecture described herein looks much like the uncontrolled internet. However, by improving the control of computer resources and the allocation of them to particular tasks, the performance of a large computer network of an Internet service provider can be substantially improved. By improved control over its network, an ISP can realize increased customer satisfaction, increased utilization of network resources, decreased costs for providing a given level of service, and increased revenue.

## Claims

1. A computer network for dynamically allocating networking and computer resources for specified computer applications to a predetermined set of client computers comprised of:
a first and at least one second computer means for storing computer applications to be made available to client computers in said predetermined set of client computers, said first and said at least one second computer means being operatively coupled to each other to copy information from said first computer to said at least one second computer means;
at least one proxy server computer means coupled to said first and said at least one second computer means for requesting said computer applications from said first and said at least one second computer means upon receiving request from at least one of said client computers;
a third computer coupled to said first, said at least one second, and said at least one proxy server computers for monitoring said first, said at least one second, and said proxy computers;
whereby said third computer controls how many copies of each supported application are available on said at least one second computer means and which of said at least one second computer means in the network have copies of each supported application.

2. The computer network of claim 1 wherein said third computer is a monitoring and controlling computer that monitors and controls said first and said at least one second computer means and said at least one proxy server means.

3. The computer network of claim 1 wherein said first and said at least one second computer means is a server resource computer.

4. A method for allocating computer resources for specified computer applications to a predetermined set of client computers comprised of the steps of:
providing computer applications to be made available to client computers in said predetermined set of client computers on a first and at least one second computer operatively coupled to each other to copy information from said first computer to said at least one second computer;
providing at least one proxy server computer coupled to said first and said at least one second computer that requests computer applications from said first and said at least one second computer upon receiving request for a computer application from at least one of said client computers;
providing a third computer coupled to said first, said at least one second, and said at least one proxy server computers that monitors said first, said at least one second, and said proxy computers;
whereby said third computer controls how many copies of each supported application are available on said at least one second computer means and which of said at least one second computer means in the network have copies of each supported application.

5. The method of claim 4 further including the step of: collecting customer information on said proxy server computer and said first and said at least one second computer.

6. The method of claim 4 further including the step of:
monitoring and controlling information on said first and said at least one second
computer and said at least one proxy server computer.
